# EUROPEAN PATENT APPLICATION

(11) **EP 3 604 678 A1**
(43) Date of publication of application: **05.02.2020**
(21) Application number: 18306068.0
(22) Date of filing: 03.08.2018
(51) Int. Cl.: E01D 19/04, E04H 9/02, F16F 7/06, F16F 7/12

(54) **SEISMIC ISOLATION BEARING**

(71) Applicant: Soletanche Freyssinet, 92500 Rueil-Malmaison (FR)
(72) Inventor: MAILLET, Vincent, 78114 MAGNY LES HAMEAUX (FR); SARTORI, MAURO, 20090 VIMODRONE (IT); GROULT, Antonin, 78140 VAUX SUR SEINE (FR); CYNOBER, Charles, 92130 ISSY LES MOULINEAUX (FR)
(74) Representative: Nony

(57) **Abstract**

A seismic isolation bearing (10) comprising:
- a base element (20) for connection to a substructure,
- at least one anti-uplift element (30; 140) positioned at least partially above the base element (20),
- a motion element (40) for connection to a superstructure, the motion element extending at least partially between the base element (20) and the at least one anti-uplift element (30; 140), the displacement of the motion element (40) both in rotation and translation being constrained in a plane (XY) by the base (20) and anti-uplift (30; 140) elements,
- at least one of a shear pin (90) and friction interface (36,82,48; 26,80,47; 150, 151) for immobilizing the motion element (40) relative to the base element (20) both in rotation and translation when forces exerted on the motion element remain below predetermined thresholds, the displacement of the motion element in rotation and/or translation occurring when forces exerted on the motion element exceed said predetermined thresholds,
- at least one energy dissipation element for absorbing energy of said displacement.

## Description

The present invention relates to a seismic isolation bearing and to a structure equipped with such a bearing, for example a passenger boarding bridge.

### BACKGROUND OF THE INVENTION

A passenger boarding bridge (PBB) typically comprises a telescopic tunnel that connects a rotunda to a cab serving as a portal to the aircraft. The rotunda is supported by a column and the telescopic tunnel is free to pivot vertically and to be elevated or lowered to align with the passenger access door of the plane. The base of the column is fixed relative to its foundation.

In some countries, the PBB should comply with seismic regulations.

Seismic isolation bearings are used to transfer a vertical load, allow for lateral displacements and structure rotation, and to dissipate energy in case of a seism.

US 8,926,180 discloses an example of an isolation bearing comprising an upper base plate for connection to a superstructure, a lower base plate to connection to a substructure such as a foundation, a disc bearing core centrally positioned between the base plates and a shear spring configured to deform in shear upon lateral movement of the upper base plate relative to the lower base plate. The upper base plate is not prevented from tilting about an horizontal axis and thus such a bearing is not entirely satisfactory for supporting the column of a PBB

WO 2015/136457 A1 relates to a sliding bearing comprising a polymeric material plate.

Standards like EN 15129 disclose anti-seismic devices that aim at dissipating some energy to lower torque on the system, via Displacement Dependent Dissipation (DDD), Viscous Damping (VD), or any other technique or combination of techniques.

Various anti-seismic devices are disclosed in the article (New Type of Energy Dissipation Devices for Seismic Protection of Bridges, A. Marioni, V. Ciampi, 3WCJSBCS).

### SUMMARY OF THE INVENTION

There remains a need for a seismic isolation bearing capable of isolating a structure, for example a PBB, against seismic displacements.

There is also a need for a seismic isolation bearing with limited footprint on the ground.

The present invention aims to satisfy at least one of these needs.

Exemplary embodiments of the present invention relate to a seismic isolation bearing comprising:
- a base element for connection to a substructure, such as a foundation,
- at least one anti-uplift element positioned at least partially above the base element,
- a motion element for connection to a superstructure, the motion element extending at least partially between the base element and the at least one anti-uplift element, the displacement of the motion element both in rotation and translation being constrained in a plane by the base and anti-uplift elements,
- at least one of a shear pin and a friction interface for immobilizing the motion element relative to the base element both in rotation and translation when forces exerted on the motion element remain below predetermined thresholds, the displacement of the motion element occurring when forces exerted on the motion element exceed said predetermined thresholds,
- at least one energy dissipation element for absorbing energy of said displacement.

The isolation seismic bearing according to the invention is capable of reducing or limiting seismic forces and accelerations transferred from the ground to the PBB and other bridges, buildings and other types of structures where a torque resisting connection is required together with the capacity of providing lateral flexibility. One thus avoids that the load exceeds the critical limit for the foundation. The anti-uplift disc is used to apply prestressing setting based on the horizontal critical force of the foundation.

An isolation seismic bearing made in accordance with the invention is capable of operating in two states. In a first state the bearing is fully fixed and restrained under service and in a second state the bearing is dissipative under seism. In the second state, the motion element is capable of displacement both in rotation around a vertical axis and in translation in a horizontal plane.

In exemplary embodiment of the invention, the at least one anti-uplift element is superposed to the motion element over an entire periphery of the motion element.

The motion element is preferably disc-shaped, as well as the base element and the at least one anti-uplift element. The base element and the at least one anti-uplift element may be connected by bolts at their periphery. One of the base element and the at least one anti-uplift element may comprise an annular rim on which the other of the base element and the at least one anti-uplift element rests. In a variant, the bearing comprises a plurality of anti-uplift elements, each anti-uplift element being connected through a tie rod to the base, as will be detailed further below.

Preferably, the at least one anti-uplift element comprises an inner portion that extends over the motion element in cantilever fashion. Said inner portion may have a thickness that decreases inwards

Preferably, the at least one anti-uplift element comprises a central opening for connection of the motion element to the superstructure. The motion element bears for example a sleeve connected at its base to a flange, said flange being connected to the motion element in spaced relationship. A spacer ring may extend between the motion element and the flange. The motion element may also bear a post or other connecting structure, in a variant.

The isolation bearing may comprise a core fixed to the base element, and a plurality of arms extending around a vertical axis of the core, articulated at one end on the core and at the other end on the motion element, the core and the motion element preferably comprising grooves facing each other and in which said arms are pivotally inserted. The rotation of the motion element, once the load is enough to overcome the friction forces, is thus blocked around all horizontal axes while at the same time allowed along the vertical axis.

The arms are in an embodiment of the invention Displacement Dependent Dissipation elements. The arms are preferably made of ductile carbon steel with an arcuate shape. Dissipation results from the elastic-plastic behavior of steel.

The isolation bearing preferably comprises low friction elements interposed between an upper face of the motion element and a corresponding surface of the at least one anti-uplift element facing the motion element, and between a bottom face of the motion element and a corresponding surface of the base element facing the motion element, said low friction elements being preferably annular shaped, and preferably made of a polymeric material of low coefficient of friction. At least one of the surfaces against which the low friction elements bear is preferably made of stainless steel, for better control over time of the characteristics of the friction interface. The low friction elements bear the axial load and are compressed.

If the friction interface does not allow by itself to immobilize the motion element relative to the base element during normal operation of the device in the absence of seismic load, the isolation bearing may comprise at least one shear pin for blocking the displacement of the motion element relative the base element until a predetermined load is reached, that leads to the rupture of the shear pin.

In a variant embodiment, the isolation bearing comprises at least one elastomeric bearing that is deformed in shear by a displacement of the motion element relative to the base element, the elastomeric bearing preferably extending in a central aperture of the motion element between the base element and a flange connected to the motion element.

In a variant embodiment, the motion element comprises a plurality of openings, preferably regularly spaced around a central axis of the motion element, for example three openings angularly spaced by 120° from each other.

Each opening serves for the going through of a tie rod which is connected at one end to the base element. An anti-uplift element is mounted on the rod and is forced against the motion element. At least one low friction element is interposed between the at least one anti-uplift element and the motion element, for example a low friction ring.

The motion element may be covered by a stainless-steel liner on which the low friction material bears.

The at least one anti-uplift element may be forced against the motion element by any tensioning means, such as for example a tightening nut engaged on a threaded portion of the tie rod.

Giving flexibility to the tensioning means may help control the applied pressure with more accuracy. In a preferred embodiment, the at least one anti-uplift element is tightened against the motion element by at least one spring washer, such as a Belleville washer. For example, a plurality of stacked Belleville washers is interposed between the at least one anti-uplift element and the tightening nut.

A further object of the invention is a structure comprising a substructure such as a foundation and a superstructure connected to the substructure via a seismic isolation bearing according to the invention as defined above, wherein the superstructure is for example a passenger boarding bridge.

### BRIEF DESCRIPTION OF THE DRAWINGS

Other features and advantages of the present invention will become more apparent from a perusal of the following description and the accompanying drawing, where:
FIG.1 is a side view of a passenger boarding bridge showing a seismic isolation bearing of the invention,
FIG.2 is a perspective view showing the seismic isolation bearing of FIG.1,
FIG.3 shows half of the bearing of FIG.2 together with some internal details of the bearing,
FIG.4 is a section of the bearing taken along its vertical axis,
FIG.5 is an equivalent mechanical scheme of the bearing,
FIG.6 is a view analogous to FIG.4 of a variant embodiment,
FIG.7 is a perspective view of a variant of the motion element, and
FIG.8 is a partial and schematic view of a bearing incorporating the motion element of FIG.7.

### DETAILED DESCRIPTION

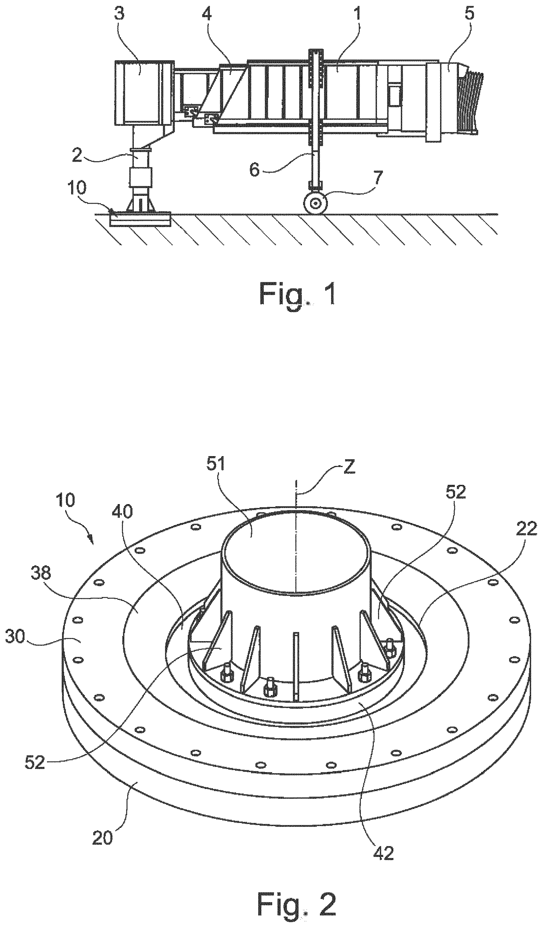

FIG.1 shows an example of a passenger boarding bridge (PBB) 1 to which the invention is applied. The PBB may be of any known type without departing from the scope of the invention.

The bridge is typically supported at its end proximate to the passenger terminal by a column 2 that pivotally supports a rotunda 3.

The PBB comprises a plurality of telescopic tunnel sections 4 and carries a cab 5 which serves as portal to the aircraft.

A wheeled structure 6 supports the bridge close to its distal end and provides elevation adjustment. The wheels 7 may be driven by a motor to allow the bridge to be driven to the airplane to be serviced.

The column 2 is supported by a seismic isolation bearing 10 made in accordance with the invention and shown in isolation in FIGs 2-4.

The bearing 10 comprises a base disc 20 to be connected to a foundation by any standard method and an anti-uplift disc 30 fixed on the base disc 20 by any appropriate fixation means such as bolts 31 regularly arranged near the outer periphery of the discs, as shown.

The anti-uplift disc 30 is provided with a central opening 22.

The base disc 20 comprises at its periphery an annular rim 21 on which the anti-uplift disc 30 bears so that the two discs can accommodate between them a motion disc 40.

The motion disc 40 is provided with a central opening 43.

A central core 60 is fixed to the base disc 20 under the flange 50 so as to extend through the central opening of the motion disc 40 coaxially with the sleeve 51.

The core 60 is provided with a peripheral groove 63 in which proximal ends 71 of C shaped metal arms 70 are articulated.

The flange 50 may be provided with a central aperture 56 as shown, opening out on the core 60.

The motion disc 40 bears on its upper face 41 a spacer ring 42 on which a flange 50 supporting a sleeve 51 for connection to the column 2 rests.

Stiffeners 52 may connect the outer periphery of the sleeve to the flange 50.

The sleeve 51 is cylindrical along a longitudinal axis Z which is substantially vertical.

The flange 50 is fixed to the motion disc 40 through threaded rods 53 and nuts 54 arranged at the periphery of the flange 50.

The motion disc 40 is provided with a corresponding groove 45 facing the groove 63 and in which distal ends 72 of the arms 70 are articulated thanks to the lower end of the rods 53.

At least two low friction rings 80 are interposed between the bottom face 47 of the motion disc 40 and the facing surface 26 of the base disc 20. Similarly, at least one low friction ring 82 is interposed between the upper face 48 of the motion disc 40 and the facing surface 36 of the anti-uplift disc 30. In the illustrated embodiment two rings 82 are shown but these rings may be replaced by one ring to provide better control the point load value and setting of pre-compression force. The lower low friction rings 80 are connected to the motion disc 40, the upper low friction rings 82 are connected to anti uplift disc 30. The position of the rings 80 and 82 shall be adequate with the motion stroke.

The low friction rings 80 and 82 may be made in PTFE such as TEFLON or other appropriate low friction materials such as ISOGLIDE. The motion disc 40 extends perpendicularly to the axis Z. The motion disc 40 is thus maintained for in-plane rotation around vertical axis Z by the assembly of the anti-uplift disc 30 and the base disc 20. In other words, the motion disc 40 has a freedom of move in rotation around its axis of symmetry and a freedom to move in the horizontal X and Y directions of the XY plane perpendicular to the vertical Z axis.

The position of the two lower rings 80 is adequately chosen to transfer directly the vertical load to the foundation in service or under seismic event.

The motion disc 40 may be made in stainless steel or covered with a stainless steel liner at least on its upper surface 48 for providing a better sliding interface. Similarly, the base disc may be covered on its surface 26 by a stainless steel liner.

The motion disc 40 is compressed between the base 20 and anti-uplift 30 discs and immobilized by friction between them. One may act on the pre-stressing of the anti-uplift disc 30 to set up the friction resistance and the horizontal force trigger value for in plane motion of the motion disc 40 under seismic event.

The anti-uplift disc 30 may have, as shown, a radially inner portion 39 that extends in cantilever fashion over the motion disc 40, with a thickness that decreases towards the opening 22 thanks to a chamfer 38 on the upper surface of the disc 30.

The arms 70 constitute DDD elements that do not support any load except seismic horizontal forces. They provide energy dissipation effect in case the amplitude of the seism displacements exceeds some limits.

The dimensions of the discs 20, 30 and 40 are selected depending on the load and size of foundation and the required maximal in plane motion under seismic event.

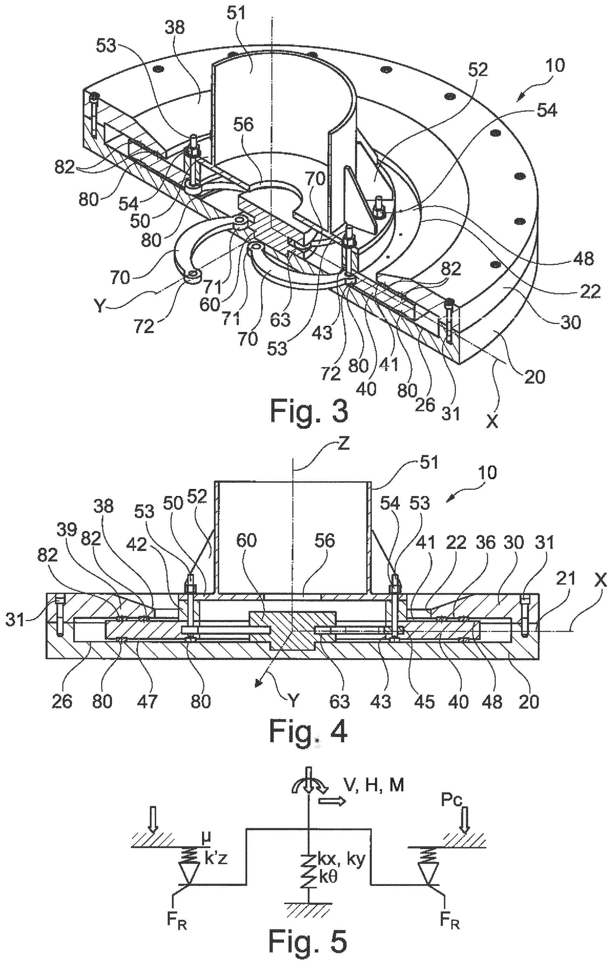

An equivalent modelling of the bearing is shown in FIG.5.

In this figure the following signs respectively correspond to:
- V: Vertical service force
- H: Horizontal service force
- M: Moment service force
- F_{R}: Friction resistance (trigger value), F_{R} ≤ Hc (Critical Horizontal force of the foundation)
- Pc: Precompression force
- µ: Static friction factor + dynamic friction factor
- kx, ky, kθ: Equivalent stiffness of the dissipative element
- k'z: Equivalent stiffness of the low friction rings at the friction interface

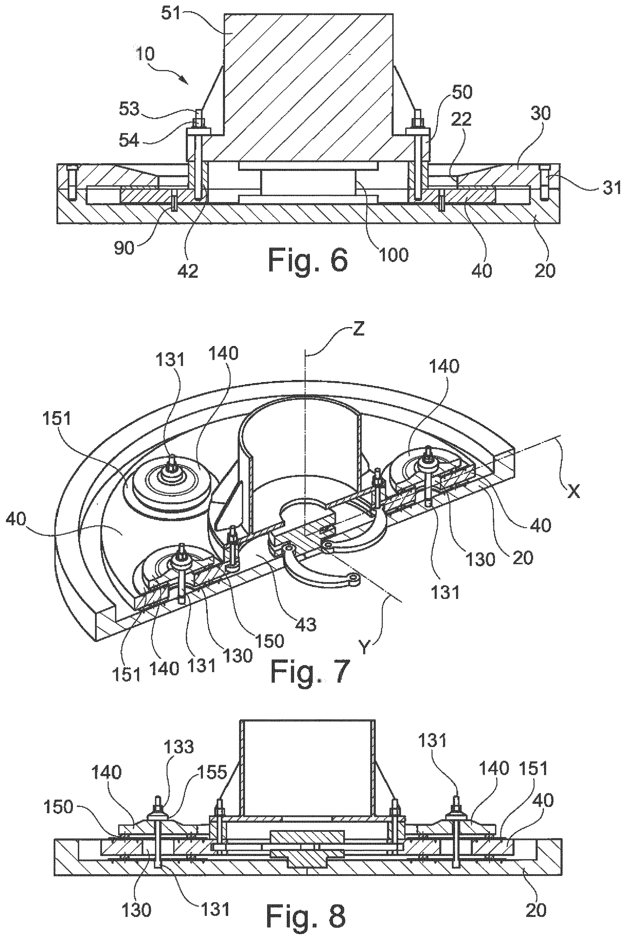

FIG.6 shows a variant of a bearing made in accordance with the invention in which shear pins 90 are provided to immobilize the motion disc 40 relative to the base disc 20 until the forces exerted on the bearing exceeds the total mechanical resistance of the pins 90. These pins 90 can be used to set the trigger value to a higher value if mere friction resistance is not adequate. The pins 90 are replaceable after seism.

In this embodiment, the arms 70 are replaced by an elastomeric bearing 100 having its upper and lower faces respectively fixed to the flange 50 and the base disc 20.

In the variant embodiment of FIGs.7 and 8, the motion element 40 comprises a plurality of openings 130, preferably regularly spaced around the central axis of the motion element 40, for example three openings 130 angularly spaced by 120° from each other.

Each opening 130 serves for the going through of a tie rod 131 which is connected at one end to the base element 20. An anti-uplift element 140 is mounted on the rod and is forced down against the motion element 40. A low friction element 150 is interposed between the bottom face of the anti-uplift element 140 and the upper face of the motion element 40, for example a low friction ring 150 (only one anti-uplift element 140 being shown in FIG.7).

The motion element 40 may be covered around each opening 130 by a stainless-steel liner 151 on which the low friction ring 150 bears.

Each anti-uplift element 140 may be forced against the motion element 40 by any tensioning means, such as for example a tightening nut 133 screwed on a threaded portion of the corresponding tie rod 131.

Giving flexibility to the tensioning means may help control the applied pressure with more accuracy. In the example shown, the anti-uplift element 140 is tightened against the motion element 40 by at least one spring washer 155, such as a Belleville washer. For example, a plurality of stacked Belleville washers 155 is axially interposed between the upper face of the anti-uplift element 140 and the lower face of the tightening nut 133.

The embodiment of FIGs 7 and 8 allows better control of the prestressing of the motion element 40

The invention offers capacity of providing moment resistant restrain and in the same time is able to provide lateral flexibility and energy dissipation.

The present invention is not limited to the embodiments described with reference to FIGs 1-6.

The invention applies to protection of superstructures other than PBB, for example buildings and road or railway bridges and any light equipment structure where integration of seismic isolation system must be installed at the base of a column.

Other types of DDD elements can be used, as well as an additional shear and torsion springs.

## Claims

1. A seismic isolation bearing (10) comprising:
- a base element (20) for connection to a substructure,
- at least one anti-uplift element (30; 140) positioned at least partially above the base element (20),
- a motion element (40) for connection to a superstructure, the motion element extending at least partially between the base element (20) and the at least one anti-uplift element (30; 140), the displacement of the motion element (40) both in rotation and translation being constrained in a plane (XY) by the base (20) and anti-uplift (30; 140) elements,
- at least one of a shear pin (90) and friction interface (36,82,48; 26,80,47; 150, 151) for immobilizing the motion element (40) relative to the base element (20) both in rotation and translation when forces exerted on the motion element remain below predetermined thresholds, the displacement of the motion element in rotation and/or translation occurring when forces exerted on the motion element exceed said predetermined thresholds,
- at least one energy dissipation element for absorbing energy of said displacement.

2. The isolation bearing of claim 1, the at least one anti-uplift element (30) being superposed to the motion element (40) over an entire periphery of the motion element (40).

3. The isolation bearing of any one of the preceding claims, the motion element (40) being disc-shaped, the base element (20) and the anti-uplift element (30; 140) each being preferably disc-shaped.

4. The isolation bearing according to any one of the preceding claims, the at least one anti-uplift element (30; 140) comprising an inner portion (39) that extends over the motion element (40) in cantilever fashion.

5. The isolation bearing according to any one of the preceding claims, the motion element (40) comprising a central opening (43) for connection of the motion element (40) to the superstructure.

6. The isolation bearing according to any one of the preceding claims, the motion element (40) bearing a sleeve (51), preferably connected at its base to a flange (50), said flange (50) preferably being connected to the motion element (40) in spaced relationship.

7. The isolation bearing of any one of the preceding claims, comprising a core (60) fixed to the base element (20), and a plurality of arms (70) extending around a vertical axis (Z) of the core, articulated at one end on the core (60) and at the other end on the motion element (40), the core and the motion element preferably comprising grooves (45, 63) facing each other and in which said arms (70) are pivotally inserted.

8. The isolation bearing of claim 7, the arms (70) being Displacement Dependent Dissipation elements, the arms (70) preferably being made of a ductile carbon steel with an arcuate shape.

9. The isolation bearing according to any one of the preceding claims, comprising low friction elements (80, 82; 150) interposed between an upper face of the motion element (40) and a corresponding surface (36) of the at least one anti-uplift element facing the motion element, and between a bottom face of the motion element (40) and a corresponding surface (26) of the base element facing the motion element, said low friction elements being preferably annular shaped, and preferably made of a polymeric material of low coefficient of friction.

10. The isolation bearing of claim 9, at least one of the surfaces against which the low friction elements (80, 82; 150) bear being made of stainless steel.

11. The isolation bearing according to any one of the preceding claims, comprising at least one shear pin (90) for blocking the displacement of the motion element (40) relative the base element (20).

12. The isolation bearing of any one of the preceding claims, comprising at least one elastomeric bearing (100) that is deformed in shear by a displacement of the motion element relative to the base element (20), the elastomeric bearing (100) preferably extending in a central aperture of the motion element (40) between the base element (20) and a flange (50) connected to the motion element (40).

13. The isolation bearing of any one of the preceding claims, the motion element (40) comprising a plurality of openings (130), preferably regularly spaced around a central axis of the motion element (40), each opening (130) serving for the going through of a tie rod (131) connected at one end to the base element (20), an anti-uplift element (140) being mounted on the tie rod and forced against the motion element (40), at least one low friction element (150) being interposed between the anti-uplift element (140) and the motion element (40).

14. The isolation bearing of claim 13, the anti-uplift element (140) being forced against the motion element (40) by a tensioning means (133), and preferably tightened against the motion element by at least one spring washer (155) interposed between the anti-uplift element (140) and a tightening nut (133).

15. A structure comprising a substructure such as a foundation and a superstructure connected to the substructure via a seismic isolation bearing (10) as defined in any one of claims 1 to 14, wherein the superstructure is preferably a passenger boarding bridge (1).
